# EUROPEAN PATENT SPECIFICATION

(11) **EP 1 316 404 B1**
(45) Date of publication and mention of the grant of the patent: **25.10.2006**
(21) Application number: 02004270.1
(22) Date of filing: 27.02.2002
(51) Int. Cl.: B29C 45/28, F15B 15/14, B29C 45/16

(54) **Multi-position control cylinder for injection moulding machines and manufacturing method.**
Mehrstufiger Steuerzylinder einer Spritzgiessmaschine und Verfahren zur dessen Herstellung
Vérin de commande à positions multiples pour une machine de moulage par injection et procédé de son fabrication

(30) Priority: 28.11.2001 KR 2001074489
(43) Date of publication of application: 04.06.2003
(73) Proprietor: Yudo Co., Ltd., Hwaseung-Si, Kyounggi-do, 445-911 (KR)
(72) Inventor: Yu, Young-Hee, Seoul, 120-829 (KR)
(74) Representative: Banzer, Hans-Jörg

(56) References cited:
- EP-A- 0 558 931
- WO-A-01/94093
- US-B1- 6 214 275
- US-B1- 6 274 075
- PATENT ABSTRACTS OF JAPAN vol. 2000, no. 04, 31 August 2000 (2000-08-31) & JP 2000 025072 A (MITSUBISHI MATERIALS CORP), 25 January 2000 (2000-01-25)

## Description

### BACKGROUND OF THE INVENTION

### Field of the Invention

The present invention relates, in general, to the structure of multi-position control cylinders for hot runners of injection molding machines and, more particularly, to a multi-position control cylinder for such hot runners, which has a simple construction and performs a desired multi-position control operation by an improved cylinder and piston structure, thus accomplishing desired operational stability, economic efficiency and structural compactness, and to a method of manufacturing such a cylinder.

### Description of the Prior Art

In the prior art plastic injection molding process, it has been typical to produce plastic products of the same material using one injection mold. However, in recent years, it is necessary to inject two or three kinds of resins into one mold at the same time or sequentially to form a product having improved quality, in addition to achieving desired productivity, during an injection molding process.

Such a requirement of injection of two or three kinds of resins into one mold forces the cylinder for hot runners to be designed as a phase changeable cylinder.

In order to provide such a phase-changeable cylinder for hot runners, a multi-position control cylinder has been proposed. The conventional multi-position control cylinder for hot runners is fabricated by laying a plurality of cylinders such that one is laid on top of another. However, such a conventional multi-position control cylinder is problematic in that it has a complex construction, and limits the space for installation thereof. Therefore, the conventional multi-position control cylinder has not been preferably used with hot runners of injection molding machines.

In EP 0 558 931 A1, a piston drive to be used in injection molding is described. The piston drive includes three coaxially arranged pistons which act on the same valve pin. The pistons are each fixedly connected to a common piston rod which extends through bottom portions of the cylinders holding the pistons. The piston rod is slidably held in passage openings in the bottom portions of the cylinders. This known type of piston drive allows for moving the valve pin between two different positions, namely a closed position and an open position and corresponds to the features as specified in the preamble of independent claims 1 and 2.

In US 6,274,075 B1 a valve member actuating mechanism is described in which the valve member can be controlled between four different positions. The actuating mechanism comprises a front cylinder and a rear cylinder which are aligned with the valve member. A first piston is seated in the front cylinder and connected to the rear end of the valve member. A second piston is seated in the rear cylinder. A third piston is seated behind the second piston in the rear cylinder, the third piston having a stem portion which extends forwardly through an opening in the second piston into the first cylinder.

### SUMMARY OF THE INVENTION

Accordingly, the present invention has been made keeping in mind the above problems occurring in the prior art, and an object of the present invention is to provide a multi-position control cylinder for hot runners of injection molding machines, which has a multi-stage hole formed in a unit body and seats a desired number of cylinders with pistons in the multi-stage hole such that one cylinder is laid on top of another to form a multi-stage cylinder structure, thus having a simple construction and accomplishing a reliable operation, and which easily increases the number of cylinders seated in the multi-stage hole by seating a desired number of additional cylinders with pistons in the multi-stage hole.

The above objects are achieved by a method of manufacturing a multi-position control cylinder of injection molding machines according to claim 1 and by a multi-position control cylinder for hot runners of injection molding machines according to claim 2. The dependent claims define preferred and advantageous embodiments of the invention.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a sectional view of a multi-position control cylinder for hot runners of injection molding machines in accordance with the preferred embodiment of the present invention;
Fig. 2 is a sectional view of the multi-position control cylinder of this invention when the cylinder is not operated;
Fig. 3 is a sectional view of the multi-position control cylinder of this invention when a first piston of the cylinder is operated; and
Fig. 4 is a sectional view of the multi-position control cylinder of this invention when a second piston of the cylinder is operated.

### DETAILED DESCRIPTION OF THE INVENTION

Reference now should be made to the drawings, in which the same reference numerals are used throughout the different drawings to designate the same or similar components.

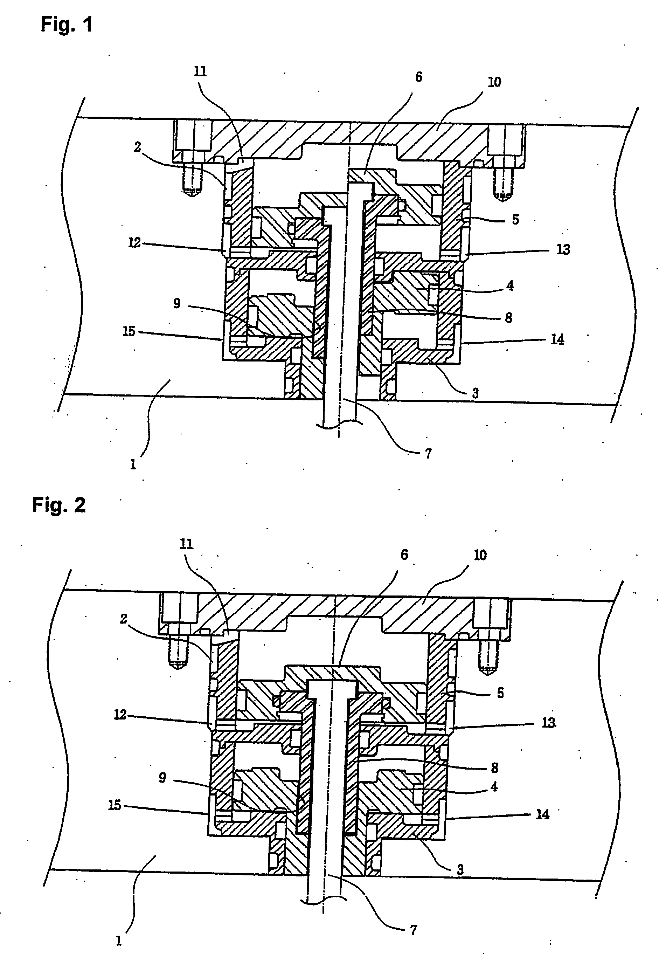

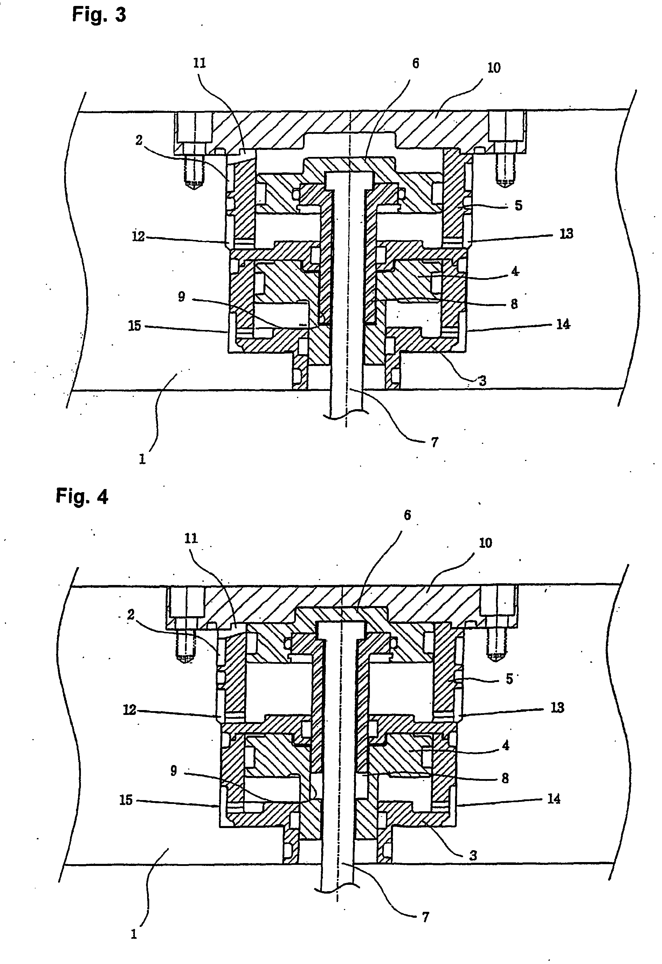

Fig. 1 is a sectional view of a multi-position control cylinder for hot runners of injection molding machines in accordance with the preferred embodiment of the present invention. Fig. 2 is a sectional view of the multi-position control cylinder of this invention when the cylinder is not operated. Fig. 3 is a sectional view of the multi-position control cylinder of this invention when a first piston of the cylinder is operated. Fig. 4 is a sectional view of the multi-position control cylinder of this invention when a second piston of the cylinder is operated.

As shown in the drawings, the multi-position control cylinder according to the preferred embodiment comprises a multi-stage hole 2 formed in a unit body 1 for seating a plurality of cylinders in the unit body 1. A first cylinder 3 having a first piston 4 is seated in the lower part of the multi-stage hole 2. A second cylinder 5 having a second piston 6 is seated in the multi-stage hole 2 at a position above the first cylinder 3. A valve pin 7 is coupled to the second piston 6 using a valve pin coupling member 8. In such a case, the valve pin 7 extends downward from the second piston 6 while passing through the first piston4, with the lower portion of the valve pin coupling member 8 inserted into the upper portion of the first piston 4. An anti-vacuum gap 9 is formed between the first piston 4 and the valve pin coupling member 8, and so the first and second pistons 4 and 6 are reliably operated in conjunction with each other by the valve pin coupling member 8. A cylinder head 10 covers the top of the multi-stage hole 2 at a position above the second piston 6. The multi-position control cylinder according to the preferred embodiment has two cylinders 3 and 5, thus being operated as a two-position control cylinder. In the drawings, the reference numerals 14 and 15 denote two first fluid ports formed at the lower portion of the first cylinder's sidewall for feeding or discharging pressurized fluid into or from the lower chamber of the first cylinder 3. The numerals 12 and 13 denote two second fluid ports formed at the lower portion of the second cylinder's sidewall for feeding or discharging pressurized fluid into or from the lower chamber of the second cylinder 5. The numeral 11 denotes a third fluid port formed at the upper portion of the second cylinder's sidewall for feeding or discharging pressurized fluid into or from the upper chamber of the second cylinder 5.

When it is desired to produce a three-position control cylinder, a third cylinder having a third piston is seated in the multi-stage hole at a position above the second cylinder 6. Therefore, it is easy to produce a desired multi-position control cylinder by seating a desired number of cylinders in the multi-stage hole 2 of the unit body 1.

The multi-position control cylinder according to the preferred embodiment is produced as follows: First, the multi-stage hole 2 is formed in the unit body 1. After forming the hole 2 in the unit body 1, the first cylinder 3 is seated in the lower part of the hole 2, with the first piston 4 set in the first cylinder 3. After seating the first cylinder 3 in the hole 2, the second cylinder 5 having the second piston 6 is seated in the hole 2 at a position above the first cylinder 3. In such a case, the valve pin 7 is coupled to the second piston 6 using the valve pin coupling member 8 prior to setting the second piston 6 in the second cylinder 5. After seating the second cylinder 6 in the hole 2, the top of the hole 2 is covered with the cylinder head 10.

The multi-position control cylinder of this invention is operated as follows:

When it is desired to open the gates of a hot runner, the valve pin 7 must be moved upward. In order to move the valve pin 7 upward, pressurized air is primarily fed into the lower chamber of the first cylinder 3 through the first fluid ports 14 and 15. The first piston 4 thus moves upward in the first cylinder 3 by pressure of the air. In such a case, pressurized oil in place of pressurized air may be used as an actuation fluid for the multi-position control cylinder.

When it is desired to move the valve pin 7 upward to open the gates of the hot runner, the valve pin 7 moves through a two-step movement as follows.

That is, since the lower portion of the valve pin coupling member 8 is inserted into the upper portion of the first piston 4 without leaving any gap between the lower end of the coupling member 8 and the first piston 4, the upward movement of the first piston 4 causes the coupling member 8 to move in the same direction. Due to the upward movement of the coupling member 8 by the first piston 4, the valve pin 7 moves upward to reach a first position thereof. In such a case, the bottom surface of the second cylinder 5 limits the uppermost position of the upward moving first piston 4, and so it is possible to limit the first position of the valve pin 7.

After the valve pin 7 reaches its first position by the upward movement of the first piston 4, pressurized air is fed into the lower chamber of the second cylinder 5 through the second fluid ports 12 and 13. The second piston 6 thus moves upward in the second cylinder 5, and so the valve pin coupling member 8 moves in the same direction. In such a case, the valve pin coupling member 8 is fixed to the valve pin 7, and so the valve pin 7 moves upward by the upward movement of the coupling member 8 until its reaches a second position thereof. Therefore, the upward movement of the valve pin 7 is accomplished through a two-step movement.

The second cylinder 5 has the three fluid ports 11, 12 and 13 at the upper and lower portions of its sidewall. Therefore, when pressurized air is fed into the lower chamber of the second cylinder 5 through the second fluid ports 12 and 13, the second piston 6 smoothly moves upward in the second cylinder 5 while expelling oil from the upper chamber of the second cylinder 5 through the third fluid port 11. In such a case, the valve pin coupling member 8 moves upward along the second piston 6, and the valve pin 7 smoothly reaches its second position.

When it is desired to close the gates of the hot runner, pressurized air is fed into the upper chamber of the second cylinder 5 through the third fluid port 11. The second piston 6 with the valve pin coupling member 8 thus moves downward in the second cylinder 5, and causes the first piston 4 to move in the same direction.

The first piston 4 is thus returned to its lowermost position while expelling pressurized air from the lower chamber of the first cylinder 3 through the two fluid ports 14 and 15. In addition, it is possible to prevent generation of a vacuum at the junction of the first piston 4 and the valve pin coupling member 8 due to the anti-vacuum gap 9 formed between the first piston 4 and the valve pin coupling member 8. Therefore, the first and second pistons 4 and 6 are reliably operated in conjunction with each other by the valve pin coupling member 8.

As described above, the present invention provides a multi-position control cylinder for hot runners of injection molding machines. The multi-position control cylinder of this invention has a multi-stage hole formed in a unit body, and seats a desired number of cylinders with pistons in the multi-stage hole such that one cylinder is laid on top of another to form a multi-stage cylinder structure. This multi-position control cylinder thus has a simple construction, and accomplishes a reliable operation. The multi-position control cylinder also easily increases the number of cylinders seated in the multi-stage hole by seating a desired number of additional cylinders with pistons in the multi-stage hole.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A method of manufacturing a multi-position control cylinder for hot runners of injection molding machines, comprising the steps of:
forming a multi-stage hole (2) in a unit body (1);
seating a first cylinder (3) in a lower part of the multi-stage hole (2);
setting a first piston (4) in said first cylinder (3);
seating a second cylinder (5) in the multi-stage hole (2) at a position above the first cylinder (3);
coupling a valve pin (7) to a second piston (6) using a valve pin coupling member (8);
setting the second piston (6) with the valve pin (7) in the second cylinder (5) such that the valve pin (7) extends downward from the second piston (6) while passing through the first piston (4), and
covering the top of said multi-stage hole (2) with a cylinder head (10) at a position above the second piston (6),
**characterized in that** the valve pin (7) can be controlled between a lower position, a first upper position, and a second upper position; and that a lower portion of the valve pin coupling member (8) is slidably inserted into an upper portion of the first piston (4) in such a manner that an upward movement of the first piston (4) causes the valve pin coupling member (8) to move upwardly between positions corresponding to the lower position of the valve pin (7) and the first upper position of the valve pin (7) and a downward movement of the valve pin coupling member (8) between said positions causes the first piston (4) to move downwardly.

2. A multi-position control cylinder for hot runners of injection molding machines, comprising:
a multi-stage hole (2) formed in a unit body (1);
a first cylinder (3) seated in a lower part of the multi-stage hole (2);
a first piston (4) set in said first cylinder (3);
a second cylinder (5) seated in the multi-stage hole (2) at a position above the first cylinder (3);
a second piston (6) set in the second cylinder (5);
a valve pin (7) coupled to said second piston (6) using a valve pin coupling member (8) such that the valve pin (7) extends downward from the second piston (6) while passing through the first piston (4); and
a cylinder head (10) covering the top of said multi-stage hole (2) at a position above the second piston (6),
**characterized in that** means are provided for controlling the valve pin between a lower position, a first upper position, and a second upper position; that means are provided for slidably inserting a lower portion of the valve pin coupling member (8) into an upper portion of the first piston (4) in such a manner that an upward movement of the first piston (4) causes the valve pin coupling member (8) to move upwardly between positions corresponding to the lower position of the valve pin (7) and the first upper position of the valve pin (7) and a downward movement of the valve pin coupling member (8) between said positions causes the first piston (4) to move downwardly; and that an anti-vacuum gap (9) is formed between the first piston (4) and the valve pin coupling member (8).

3. The multi-position control cylinder according to claim 2, wherein said first cylinder has a first fluid port (14, 15) at a lower portion thereof for feeding or discharging pressurized fluid into or from a lower chamber of the first cylinder (3).

4. The multi-position control cylinder according to claim 2, wherein said second cylinder has a second fluid port (12, 13) formed at a lower portion thereof for feeding or discharging pressurized fluid into or from a lower chamber of the second cylinder (5), and a third fluid port (11) formed at an upper portion of said second cylinder (5) for feeding or discharging pressurized fluid into or from an upper chamber of the second cylinder (5).

5. The multi-position control cylinder according to claim 2, wherein said first and second pistons (4, 6) are operated in conjunction with each other by the valve pin coupling member (8).

## Patentansprüche

1. Verfahren zur Herstellung eines Mehrpositionen-Steuerzylinders für Heißkanaldüsen von Spritzgussmaschinen, umfassend die Schritte:
Ausbilden eines mehrstufigen Lochs (2) in einem Einheitskörper (1);
Einsetzen eines ersten Zylinders (3) in einen unteren Teil des mehrstufigen Lochs (2);
Einsetzen eines ersten Kolbens (4) in den ersten Zylinder (3);
Einsetzen eines zweiten Zylinders (5) in das mehrstufige Loch an einer Position oberhalb des ersten Zylinders (3);
Koppeln eines Ventilstifts (7) an einen zweiten Kolben (6) unter Verwendung eines Ventilstift-Kopplungselements (8);
Einsetzen des zweiten Kolbens (6) mit dem Ventilstift (7) in den zweiten Zylinder (5) derart, dass sich der Ventilstift von dem zweiten Kolben (6) nach unten erstreckt, während er durch den ersten Kolben (4) verläuft, und
Abdecken der Oberseite des mehrstufigen Lochs (2) mit einem Zylinderkopf (10) an einer Position oberhalb des zweiten Kolbens (6),
**dadurch gekennzeichnet, dass** der Ventilstift (7) zwischen einer unteren Position, einer ersten oberen Position und einer zweiten oberen Position verstellt werden kann; und dass ein unterer Abschnitt des Ventilstift-Kopplungselements (8) gleitend in einen oberen Abschnitt des ersten Kolbens (4) derart eingesetzt ist, dass eine Aufwärtsbewegung des ersten Kolbens (4) dazu führt, dass sich das Ventilstift-Kopplungselement (8) nach oben zwischen der unteren Position des Ventilstifts (7) und der ersten oberen Position des Ventilstifts (7) entsprechenden Positionen bewegt, während eine Abwärtsbewegung des Ventilstift-Kopplungselements (8) zwischen den Positionen dazu führt, dass der erste Kolben (4) sich nach unten bewegt.

2. Mehrpositionen-Steuerzylinder für Heißkanaldüsen von Spritzgussmaschinen, umfassend:
ein mehrstufiges Loch (2), welches in einem Einheitskörper (1) ausgebildet ist;
einen ersten Zylinder (3), welcher in einen unteren Teil des mehrstufigen Lochs (2) eingesetzt ist;
einen ersten Kolben (4), welcher in den ersten Zylinder (3) eingesetzt ist;
einen zweiten Zylinder (5), welcher in das mehrstufige Loch an einer Position oberhalb des ersten Zylinders (3) eingesetzt ist;
einen zweiten Kolben (6), welcher in den zweiten Zylinder (5) eingesetzt ist;
einen Ventilstift (7), welcher mit dem zweiten Kolben (6) unter Verwendung eines Ventilstift-Kopplungselements (8) derart gekoppelt ist, dass sich der Ventilstift (7) von dem zweiten Kolben (6) nach unten erstreckt, während er durch den ersten Kolben (4) verläuft; und
einen Zylinderkopf (10), welcher die Oberseite des mehrstufigen Lochs (2) an einer Position oberhalb des zweiten Kolbens (6) abdeckt,
**dadurch gekennzeichnet, dass** Mittel zum Verstellen des Ventilstifts zwischen einer unteren Position, einer ersten oberen Position und einer zweiten oberen Position vorgesehen sind; dass Mittel vorgesehen sind zum gleitenden Einführen eines unteren Abschnitts des Ventilstift-Kopplungselements (8) in einen oberen Abschnitt des ersten Kolbens (4) derart, dass eine Aufwärtsbewegung des ersten Kolbens (4) dazu führt, dass sich das Ventilstift-Kopplungselement (8) nach oben zwischen der unteren Position des Ventilstifts (7) und der ersten oberen Position des Ventilstifts (7) entsprechenden Positionen bewegt, während eine Abwärtsbewegung des Ventilstift-Kopplungselements (8) zwischen den Positionen dazu führt, dass sich der erste Kolben (4) nach unten bewegt; und dass zwischen dem ersten Kolben (4) und dem Ventilstift-Kopplungselement (8) ein Belüftungsspalt (9) ausgebildet ist.

3. Mehrpositionen-Steuerzylinder nach Anspruch 2, wobei der erste Zylinder einen ersten Fluidanschluss (14, 15) an einem unteren Abschnitt davon zum Zuführen oder Abführen von Druckfluid in eine bzw. aus einer unteren Kammer des ersten Zylinders (3) aufweist.

4. Mehrpositionen-Steuerzylinder nach Anspruch 2, wobei der zweite Zylinder einen zweiten Fluidanschluss (12, 13) in einem unteren Abschnitt davon zum Zuführen oder Abführen von Druckfluid in eine bzw. aus einer unteren Kammer des zweiten Zylinders (5) aufweist sowie einen dritten Fluidanschluss (11) in einem oberen Abschnitt des zweiten Zylinders (5) zum Zuführen bzw. Abführen von Druckfluid in eine bzw. aus einer oberen Kammer des zweiten Zylinders (5).

5. Mehrpositionen-Steuerzylinder nach Anspruch 2, wobei die ersten und zweiten Kolben (4, 6) durch das Ventilstift-Kopplungselement (8) miteinander gekoppelt arbeiten.

## Revendications

1. Procédé de fabrication de vérin de commande à positions multiples pour canaux chauffants de machines de moulage par injection, comprenant les étapes consistant à :
former un orifice à plusieurs étages (2) dans une unité formant corps (1) ;
asseoir un premier vérin (3) dans une partie inférieure de l'orifice à plusieurs étages (2) ;
adapter un premier piston (4) dans ledit premier vérin (3) ;
asseoir un second vérin (5) dans l'orifice à plusieurs étages (2) dans une position au-dessus du premier vérin (3) ;
coupler une goupille de soupape (7) à un second piston (6) en utilisant un élément de couplage de goupille de soupape (8) ;
adapter le second piston (6) avec la goupille de soupape (7) dans le second vérin (5) de sorte que la goupille de soupape (7) s'étende vers le bas à partir du second piston (6) tout en traversant le premier piston (4), et
recouvrir le dessus d'un orifice à plusieurs étages (2) d'une culasse de vérin (10) à la position située au-dessus du second piston (6),
**caractérisé en ce que** la goupille de soupape (7) peut être commandée entre une position inférieure, une première position supérieure et une seconde position supérieure ; et **en ce qu'**une partie inférieure de l'élément de couplage de la goupille de soupape (8) est insérée par coulissement dans une partie supérieure du premier piston (4) de manière à ce qu'un mouvement ascendant du premier piston (4) entraîne l'élément de couplage de goupille de soupape (8) à se déplacer vers le haut entre des positions correspondant à la position inférieure de la goupille de soupape (7) et à la première position supérieure de la goupille de soupape (7), et de manière à ce qu'un mouvement descendant de l'élément de couplage de goupille de soupape (8) entre lesdites positions, entraîne le premier piston (4) à se déplacer vers le bas.

2. Vérin de commande à positions multiples pour canaux chauffants de machines de moulage par injection, comprenant :
un orifice à plusieurs étages (2) formé dans une unité formant corps (1) ;
un premier vérin (3) reposant dans une partie inférieure de l'orifice à plusieurs étages (2) ;
un premier piston (4) adapté dans ledit premier vérin (3) ;
un second vérin (5) reposant dans l'orifice à plusieurs étages (2) dans une position au-dessus du premier vérin (3) ;
un second piston (6) adapté dans le second vérin (5) ;
une goupille de soupape (7) couplée au dit second piston (6) au moyen d'un élément de couplage de goupille de soupape (8) de sorte que la goupille de soupape (7) s'étende vers le bas à partir du second piston (6) tout en traversant le premier piston (4) ; et
une culasse de vérin (10) recouvrant le dessus dudit orifice à plusieurs étages (2) à la position située au-dessus du second piston (6),
**caractérisé en ce que** des moyens sont fournis pour commander la goupille de soupape entre une position inférieure, une première position supérieure et une seconde position supérieure ; et **en ce que** des moyens sont fournis pour insérer par coulissement une partie inférieure de l'élément de couplage de la goupille de soupape (8) dans une partie supérieure du premier piston (4) de manière à ce qu'un mouvement ascendant du premier piston (4) entraîne l'élément de couplage de goupille de soupape (8) à se déplacer vers le haut entre des positions correspondant à la position inférieure de la goupille de soupape (7) et à la première position supérieure de la goupille de soupape (7), et de manière à ce qu'un mouvement descendant de l'élément de couplage de goupille de soupape (8) entre lesdites positions, entraîne le premier piston (4) à se déplacer vers le bas ; et **en ce qu'**un écartement anti-dépression (9) est formé entre le premier piston (4) et l'élément de couplage de goupille de soupape (8).

3. Vérin de commande à positions multiples selon la revendication 2, dans lequel ledit premier vérin comporte un premier port de fluide (14, 15) au niveau d'une partie inférieure de celui-ci pour acheminer ou évacuer du fluide pressurisé vers ou à partir d'une chambre inférieure du premier vérin (3).

4. Vérin de commande à positions multiples selon la revendication 2, dans lequel ledit second vérin comporte un deuxième port de fluide (12, 13) formé dans une partie inférieure de celui-ci pour acheminer ou évacuer du fluide pressurisé vers ou à partir d'une chambre inférieure du second vérin (5), ainsi qu'un troisième port de fluide (11) formé dans une partie supérieure dudit second vérin (5) pour acheminer ou évacuer du fluide pressurisé vers ou à partir d'une chambre supérieure du second vérin (5).

5. Vérin de commande à positions multiples selon la revendication 2, dans lequel lesdits premier et second pistons (4, 6) sont actionnés conjointement par l'élément de couplage de goupille de soupape (8).
